# EUROPEAN PATENT APPLICATION

(11) **EP 1 285 809 A1**
(43) Date of publication of application: **26.02.2003**
(21) Application number: 02707284.2
(22) Date of filing: 01.04.2002
(51) Int. Cl.: B60N 2/24, A61H 7/00, A47C 7/50, A47C 7/62

(54) **CONGESTION PREVENTING DEVICE FOR CAR**

(30) Priority: 30.03.2001 JP 2001099934
(71) Applicant: Toshiba Tec Kabushiki Kaisha, Tokyo, 101-8442 (JP)
(72) Inventor: KOBAYASHI, Hiroaki, Green Palace 201, Hadano-shi, Kanagawa 259-1304 (JP)
(74) Representative: Pfenning, Meinig & Partner GbR
(86) International application number: JP0203266
(87) International publication number: WO02078999

(57) **Abstract**

An apparatus for preventing congestion comprises a seat body 1, air bags 5g and 5h for energizing muscles of the legs of an occupant seated on the seat body 1, air supply/ exhaust device 6 for expanding and shrinking the air bags 5g and 5h and a control circuit 8 for controlling the air supply / exhaust apparatus 6.

The control circuit 8 controls the air supply/exhaust apparatus 6 to expand and shrink the air bags 5g and 5h upon a predetermined time elapsed after sitting detection means 7A detects the sitting of the occupant.

## Description

### Technical Field

The present invention relates to an apparatus for preventing congestion of an occupant for vehicle, which is installed in a vehicle such as an automobile, a bus, a truck, a railway, an airplane and so on.

### Background Art

Hitherto, there has been installed a seat for an occupant in a vehicle such as an automobile, a bus, a truck, a railway, an airplane and so on. Such a seat includes at least a seat cushion and a seat back, and further includes an arm rest and a foot rest, etc., depending upon a kind and a class in case of an automobile, and depending upon a class in case of a railway and an airplane. A reclining system is also well known, which is capable of varying an oblique angle of the seat back.

Further, in order to ensure comfort (relaxation), there is also well known an apparatus including a massage device provided in a seat cushion or a seat back.

On one hand, in recent, flying of an airplane through a long distance is ensured, and following this, there have been a great many of cases in which the occupant flew up to a destination while sitting on a seat throughout a long time.

For this reason, a danger of pulmonary embolism (so-called economy class syndrome) has been occurred.

The pulmonary embolism means that a blood flow in a lower extremity is interrupted when a occupant takes an attitude that the occupant continuously sits for a long time without moving foots and legs of the occupant to gradually concentrate a blood, thus resulting in thrombus, and as a result that the occupant starts steep movement when the airplane reaches an object destination, the thrombus flows to a lung to clock the blood vessel of the lung. This often brings the occupant to death..

On the other hand, there is an exemplary situation where such pulmonary embolism happens not only in the airplane but also in drive of a truck for long distance, for example.

There are developed statistically a great number of examples of the pulmonary embolism in the occupants who are women with average age of 60 and have flight time of 8 hours or more in an airplane, sitting on a seat without standing from the seat even only one time during the flight time.

As a situation where such a situation is likely to happen since such occupants sit particularly on a window side, they are unlikely to go a toilet as a result of constraint to adjacent occupants, and hence do not take water to the utmost.

Although there are known ones including a massage device installed on a seat cushion and a seat back and the like as described above, these have not only a purpose of basically providing a relaxing feeling, but also do not operate unless the sat occupant operates the massage device based upon the will of themselves, and hence can not demonstrate the effect of the device in view of preventing the aforementioned pulmonary embolism.

It is an object of the present invention to provide an apparatus for preventing congestion of an occupant in a vehicle wherein the congestion is prevented from happening even when a sitting occupant does not move the legs in consciousness, and which is optimum for use over a long time.

### Disclosure of the Invention

To achieve the above object, an apparatus for preventing congestion of an occupant or occupant according to claim 1 includes a seat body, actuation means for moving muscle of the legs of the occupant sit on the seat body, and control means for controlling the actuation means, the control means for actuating the actuation means after elapse of predetermined time since inputting of a predetermined input signal.

The movement of muscles of the legs of the occupant in the above description means the fact of implying demonstration of the promoting a blood flow of the legs of the occupant. For example, it implies the inclusion of movements of muscles by pressing and releasing them additionally to an expansion movement as an essential function of a muscle. Further, the actuation after a predetermined time includes actuation after elapse of predetermined time since a predetermined input signal has been inputted, actuation for every predetermined time, and actuation before a predetermined time of a scheduled time of arrival of a vehicle. Further, the predetermined input signal inputted into the control means implies an input signal from sitting detection means for detecting sitting of the occupant, an input signal by an operation of the sitting occupant in himself or herself when the occupant sits, and an input signal inputted by an operation by a crewman of a vehicle upon departing of the crewman, and so on.

An apparatus for preventing congestion of an occupant in a vehicle according to claim 2 comprises a seat body, sitting detection means for detecting the fact of sitting on the seat body, actuation means for moving muscles of the legs of the occupant sitting on the seat body, and control means for controlling the actuation means. The control means actuates the actuation means after lapse of predetermined time since sitting is detected by the sitting detection means.

In this case, the detection of sitting includes, additionally to the detection of actual sitting, a similar detection of detecting from predetermined conditions in the case that any occupant tends to sit.

An apparatus for preventing congestion of an occupant according to claim 3 comprises a seat body, sitting detection means for detecting that a occupant sits on the seat body, sitting release detection means for detecting that the sitting on the seat body is released, actuation means for moving muscles of the legs of the sitting occupant on the seat body, and control means including a timer for controlling the actuation means, the timer starting clocking when the sitting detection means detects the sitting, the sitting release detection means resetting when it detects release of the sitting , its clocking, and the control means actuating the actuation means when the timer clocks a predetermined clocking time.

Consequently, the actuation means is actuated only when it is considered that the sitting occupant actually keeps the same attitude as it is.

An apparatus for preventing congestion of an occupant according to claim 4 comprises a seat body, congestion detecting means for detecting a congestion state of a occupant sitting on the seat body, actuation means for moving muscles of the legs of a occupant sitting on the seat body, and control means for controlling the actuation means. The control means actuates the actuation means when the congestion detection means detects the congestion state.

Accordingly, the actuation means can be actuated when the occupant is in the congestion state or a state near the former.

### Operation

In accordance with the present invention, as described above, in claim 1 the control means actuates the actuation means after the lapse of a predetermined time since a predetermined input signal is inputted, so that the control means actuates the actuation means after the lapse of a predetermined time by permitting the input signal to be inputted to move muscles of the legs of a sitting occupant. Congestion occurred by the occupant sitting on the seat body for a long period of time can therefore be prevented.

In Claim 2 the control means actuates the actuation means after the lapse of a predetermined time since the sitting is detected by the sitting detection means, so that the actuation means is actuated after the lapse of a predetermined time since a occupant sits on the seat body to move muscles of the legs of the sitting occupant. Congestion occurred in the occupant while sitting on the seat body for a long period of time can therefore be prevented.

In claim 3 the timer starts clocking when the sitting detection means detects the sitting, and resets the clocking when the sitting release detection means detects release of the sitting, and actuates the actuation means when the timer docks a predetermined time, so that the clocking is started since the timer detects the sitting, and once the clocking time of the timer reaches the predetermined time, the control means actuates the actuation means to move muscles of the legs of the sitting occupant. Congestion occurred in the occupant while sitting on the seat body for a long period of time can therefore be prevented.

In claim 4 the control means actuates the actuation means when the congestion detection means detects the congestion state, so that congestion occurred while in the occupant sitting on the seat body for a long period of time can be prevented without fail.

### Brief Description of the Drawings

Fig. 1 is a perspective view of a vehicle congestion prevention apparatus associated with a first embodiment 1 of the present invention;
Fig. 2 is a plane cross-sectional view showing the construction of a foot rest;
Fig. 3 is a view, when the vehicle congestion prevention apparatus is disposed, illustrating the disposition and a use state of the apparatus;
Fig. 4 is a block diagram illustrating the construction of an air supply/exhaust apparatus of the vehicle congestion prevention apparatus;
Fig. 5 is a view illustrating a modified example 1 of the vehicle congestion prevention apparatus for description of the di9sposition and a use state of the apparatus where a foot rest is rotatably provided on a front seat;
Fig. 6 is a view illustrating a modified example 2 of the vehicle congestion prevention apparatus for description of the disposition and a use state of the apparatus where a foot rest is provided on a front seat freely to be accommodated; and
Fig. 7 is a view of a modified example 3 of the vehicle congestion prevention apparatus for description of the disposition and a use state where the foot rest is anchored to a self seat.

### Best Mode for Carrying-Out the Invention

A mode of embodying an apparatus for preventing congestion of an occupant according to present invention applied to a vehicle seat will be described with reference to the drawings below.

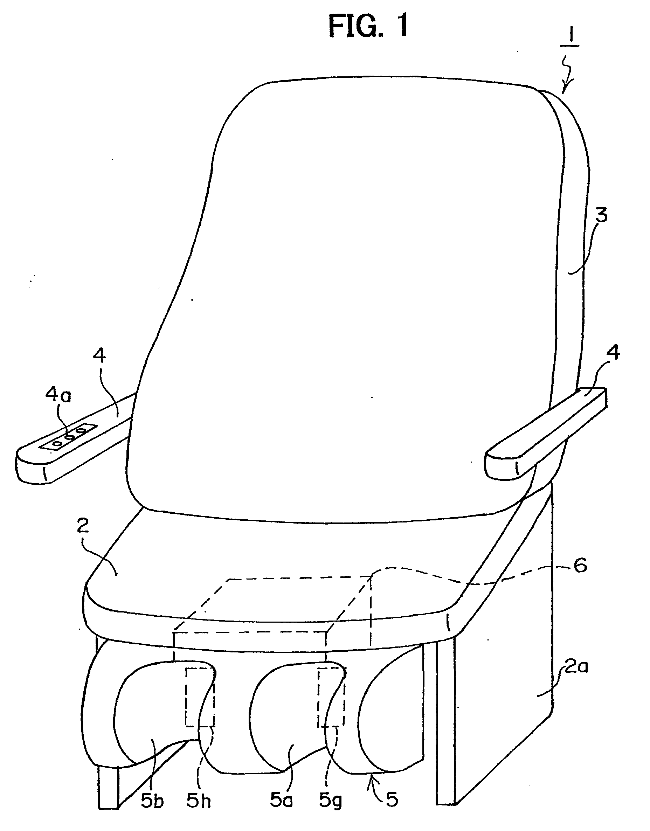

In Fig. 1, designated at 1 is a vehicle seat body for use in an airplane for example. The vehicle seat body 1 comprises a seat cushion (sitting part) 2 provided on a seat leg 2a, a seat back (leaning back) 3 capable of adjusting reclining, an arm rest 4 provided rotatably on a side surface of the seat back 3 and including an operation section (various kinds of known switches, and a leg massage switch), a foot rest 5 provided rotatably downwardly, displaced frontally of the seat cushion 2, and an air supply/exhaust apparatus 6 provided in the vicinity of the center of the seat cushion 2 below the same .

Although as the vehicle seat body 1 there is no arm rest 4 (or only one is installed) in response to its applications (for example, for automobiles and airplanes), and a head rest is provided, the embodiment may include at least the seat cushion 2 and a foot rest 5. Further, in various modifications described later only the seat cushion 2 may be needed but the foot rest 5 may be not needed, and further the seat back 3 may be needed (described later in detail).

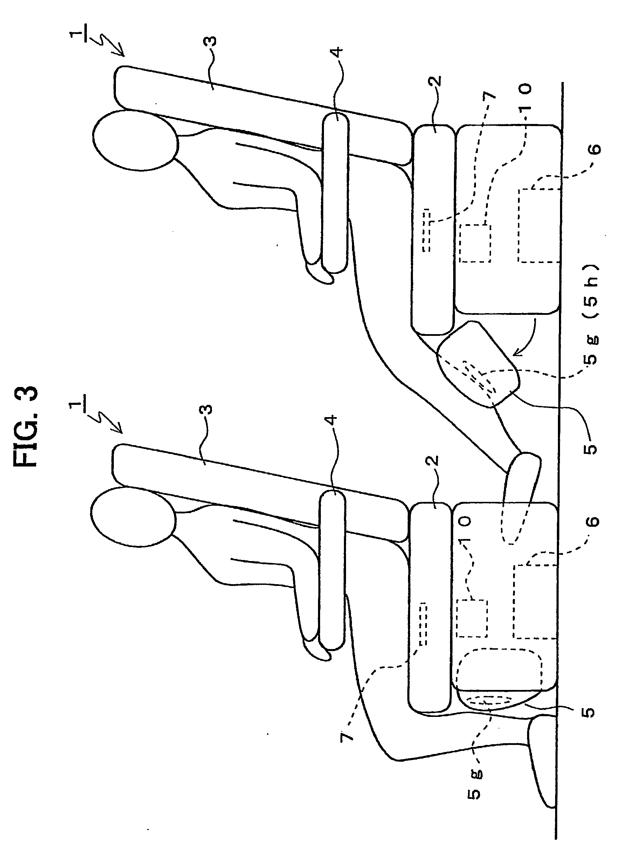

The foot rest 5 is to place the legs of an occupant or passenger, and includes a frame 5c having two recessed portions 5a, 5b both of which open frontally substantially perpendicularly to the seat cushion 2, outwardly of which frame 5c a cushion structure extending along a frame configuration and a surface layer section 5d composed of a surface skin and the like are provided. The foot rest 5 is rotatably displaceable (angular adjustment) between an accommodation position accommodated at a lower portion of the seat cushion 2 as in the vehicle seat body 1 on a front seat illustrated in Fig. 3, and a use position protruded frontally from a lower portion of the seat cushion 2 as in the vehicle seat body 1 on a rear seat in Fig. 3.

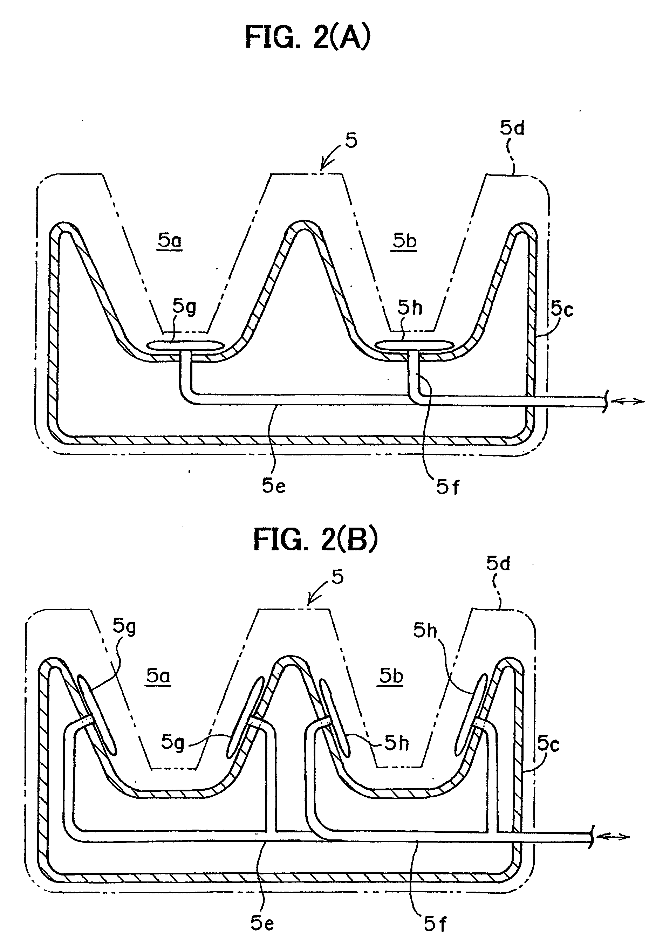

Two air hoses 5e, 5f are provided in the frame 5c. Respective one ends of the air hoses 5e, 5f penetrate the frame 5c and are connected with expandable air bags (actuation members) 5g, 5h provided at portions corresponding to bottom walls of the recessed portions 5a, 5b, i.e., at portions where the legs are placed. Respective other ends of the air hoses 5e, 5f penetrate the frame 5c and are connected with an air supply/exhaust apparatus 6. It is herein noted that the pair of air bags 5g, 5h may be provided at portions corresponding to side walls of the recessed portions 5a, 5b to hold the legs with the aid of expansion as illustrated in Fig. 2(B).

Referring to Fig. 3, in the seat cushion 2 a pressure sensor 7 is provided, which has a function as sitting detection means 7A for detecting that an occupant sits, and a function as sitting release detection means 7B for detecting that the sitting occupant is apart from the seat cushion 2 and the sitting state of the occupant is released. More specifically, when the occupant sits, pressure applied to the pressure sensor 7 is increased, so that it can be detected on the basis of a pressure change that the occupant sits, while when the occupant stands up to release the sitting, the pressure exerted on the pressure sensor 7 is decreased, so that it can be detected on the basis of a pressure change that the sitting is released. The sitting detection means 7A and the sitting release detection means 7B may be adapted such that an optical detector and a light emitting device are provided on a pair of the arm rests 4, 4 for assurance of optical detection, respectively

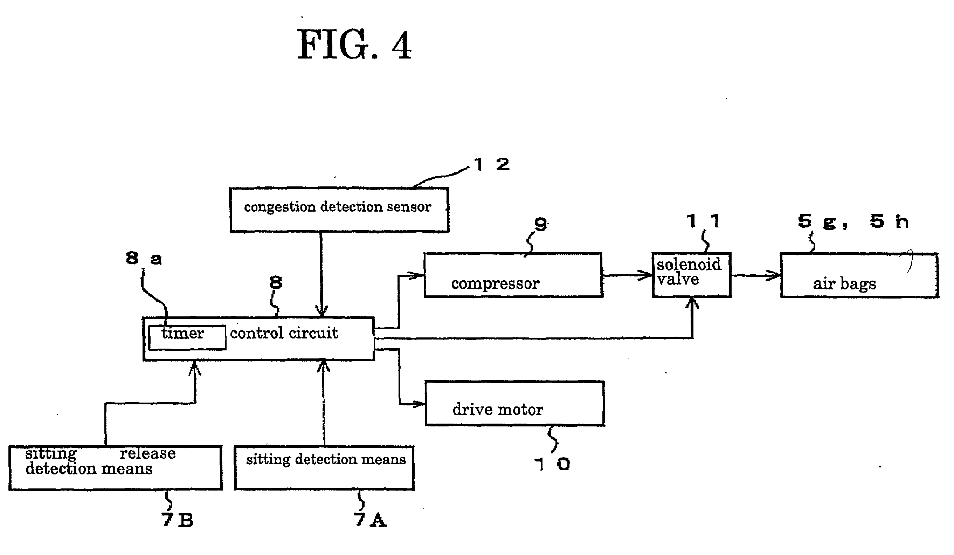

The air supply/exhaust apparatus 6 comprises a compressor 9 for supplying air to the air bags 5g, 5h, and a solenoid valve 11 for communicating the air bags 5g, 5h and the compressor 9, and opening the air bags 5g, 5h to the atmosphere. Referring further to Fig. 4, input signals from the sitting detection means 7A and the sitting releasing means 7B are inputted, and a control circuit (control means) 8 equipped with a timer 8a is provided in a body case (not shown) in which the air supply/exhaust apparatus 6 is accommodated.

The control circuit 8 controls the compressor 9, a drive motor 10, and the solenoid valve 11, etc., on the basis of a pressure signal from the pressure sensor 7, a detection signal of a congestion detection signal, and an operation signal from. the operation section 4a. The drive motor 10 is to rotate and displace the foot rest 5, by driving of which motor the foot rest 5 is protruded frontally from a lower position of the seat cushion 2 through a rotary mechanism (not shown).

The actuation means for moving muscles of the foots of the occupant is constructed with the compressor 9, drive motor 10, solenoid valve 11, and air bags 5g, 5h.

Hereupon, the sitting detection means 7A includes, additionally to a detection sensor as detecting individual sitting conditions of the congestion-prevention apparatus such as the aforementioned pressure detection sensor 7 (other than this there are known a seat belt attaching sensor 7, etc.), detection sensors that output a signal on the assumption that the occupant basically sits such as an ACC switch and an acceleration pedal, and the like in the case of automobiles and trucks (particularly in an operation seat, and detection based upon conditions where it can be estimated that the occupant would sit in the case of an airplane. As the conditions where it can be estimated that the occupant would sit in the case of an airplane, there are known those of actually detecting a flying state like time detection based upon a departure scheduled time input and arrival time input, altitude detection sensor for detecting flying, a position detection sensor utilizing a beacon and a departure/arrival detection sensor for detecting that an airplane passes through a control tower, and it is also possible to detect sitting conditions (particularly, it is preferable that the conditions are close to sitting forcing conditions as in departure/arrival time).

The predetermined time includes the time when predetermined time is elapsed (e.g., 3 hours elapsed) after a detection result of the sitting detection means 7, for every predetermined time elapsed (e.g., 3 hours) after the detection of the sitting detection means 7, and before predetermined time since arrival scheduled time, and so on. In the present embodiment, when releasing of the sitting is detected by the detection means or pressure sensor 7, the control circuit 8 resets clocking of the timer 8a.

The control circuit 8 is also capable of actuating the compressor 9 and the like irrespective of the aforementioned predetermined time and so on based upon an output signal from the congestion detection sensor 12 provided for each congestion-prevention apparatus. In the operation, a predetermined time previously set to the timer 8a may be reset. The congestion detection sensor 12 is a known apparatus (e.g., disclosed in Japanese Laid-Open Patent Publication No. Hei 7-255709 for measuring non-invasively reduced hemoglobin concentration in a blood, which apparatus is provided in an operation section 4A of the arm rest 4 for measuring reduced hemoglobin concentration in blood of the occupant.

In the present apparatus, it outputs an output signal to the control circuit 8 as indication in which the occupant is in a congestion state or in a state substantially close to the congestion state when the reduced hemoglobin concentration is 10 or more.

In the aforementioned construction, once the occupant sits on the seat cushion 2, a detection signal from the sitting detection means 7A is inputted into the control circuit 8, the timer 8a of which circuit 8 starts counting. When the timer 8a clocks a predetermined time (e.g., 3 hours), the control circuit 8 informs, as the sitting state being continued for a predetermined time, the sitting occupant of the fact that the foot rest 5 is rotated when the foot rest 5 is in an accommodation state with the aid of informing means such as a display and a buzzer, etc, and thereafter drives the drive motor 10 to force the foot rest 5 to be rotated in a use state. Thereupon, the user positions the left and right legs at the recessed portions 5a, 5b in the foot rest 5.

Subsequently, the control circuit 8 actuates the compressor 9 from the just-mentioned situation to start expansion of the air bags 5g, 5h for direct pressurization (pressing) of muscles of the legs. After the air bags 5g, 5h are expanded for a predetermined time, the air bags 5g, 5h are opened to the atmosphere with the aid of the solenoid valve 11 and are shrunk, and repeat the expansion and shrinkage.

On the seat body 1 detection means is provided for detecting whether or not the foot rest 5 (not shown) is protruded, and when an input signal from the timer 8a is inputted into the control circuit 8 after the lapse of a predetermined time since sitting and the detection means of the control circuit 8 detects the protrusion of the foot rest 5, the control circuit 8 controls the compressor 9 and the solenoid valve 11 without controlling the drive motor 10 to expand and shrink the air bags 5g, 5h, and repeats the expansion and shrinkage.

The pressurization to the air bags 5g, 5h by the expansion of the same energizes muscles of the legs to promote a blood flow on the side of the foot, and the expansion /shrinkage of the air bags 5g, 5h are repeated, and hence pressing/releasing of the muscles of the legs are repeated to promote the blood flow over the whole of the foots including the femoral region for elimination of the congestion state.

Although the number of times (or the time they are expanded / shrunk) of expansion / shrinkage of the air bags is arbitrary, continuation of several minutes is needed. Thereupon, there is ensured control such as gradually speeding up the time up to reaching the expansion/ shrinkage of the air bags 5g, 5h (e.g., the time from the initiation of the first expansion up to shrinkage completion is assumed to be 30 seconds, which time is gradually reduced). Further, as illustrated in Fig. 2(B), when the air bags 5g, 5h are disposed, paired, on the side walls of the recessed portions 5a, 5b respectively, muscles of the legs are pressurized to hold the muscles of the legs, so that the expansion and shrinkage of the muscles can be energized.

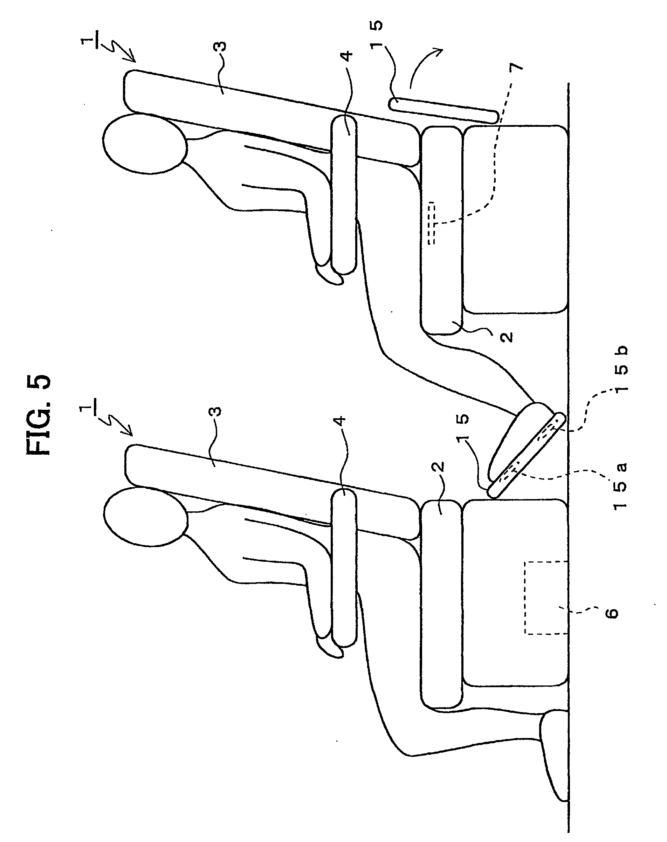

Although herein such an example is disclosed that the foot rest 5 is rotatably disposed on the seat back 2 for an occupant, it may be possible for example as illustrated in Fig. 5 that an air bag (actuation member) 15a and an air bag (actuation member) 15b are provided on a relatively flat foot placing section 15 which is provided rotatably on the back (may be the back of the seat back 3 and the seat leg section 2a) for placing the back of the foot of the sitting occupant ordinarily. Although in the case of the air bag 15b the heel is moved vertically, the tip of a toe and the heel may alternately moved in combination with the air bag 15a.

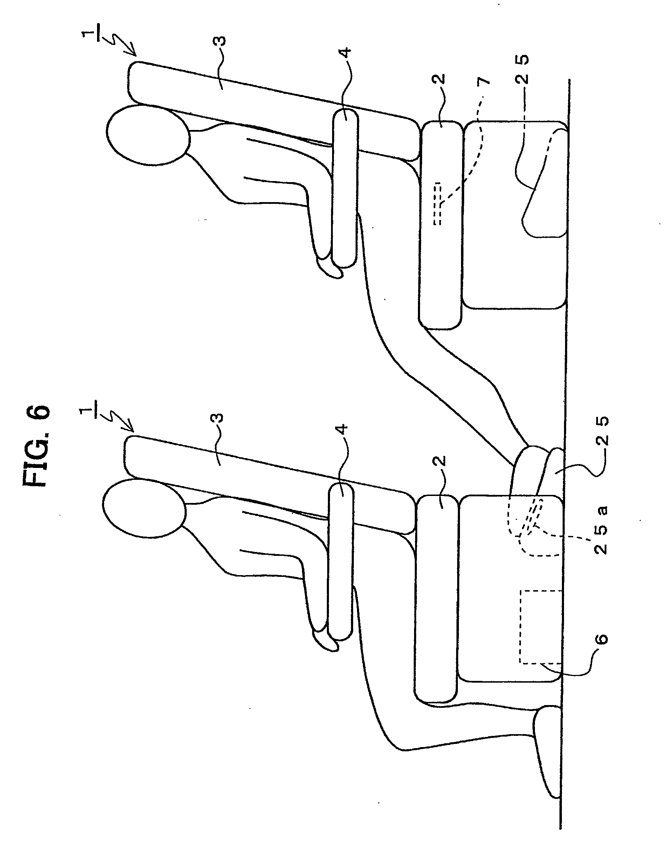

As illustrated in Fig. 6, a foot placing section 25 may be provided independently for placing at all times the foots of a sitting occupant below the seat cushion 2 on the front seat to move vertically the tip of a toe (the aforementioned toe type and common use type may be used) by expanding / shrinking the air bag 25a.

In the case of the foot placing sections 15,25 illustrated in Figs. 5 and 6, it is preferable to use a congestion-prevention apparatus for vehicle including the air supply/exhaust apparatus 6 provided on the front seat, in view of connection of the hoses 5e, 5f.

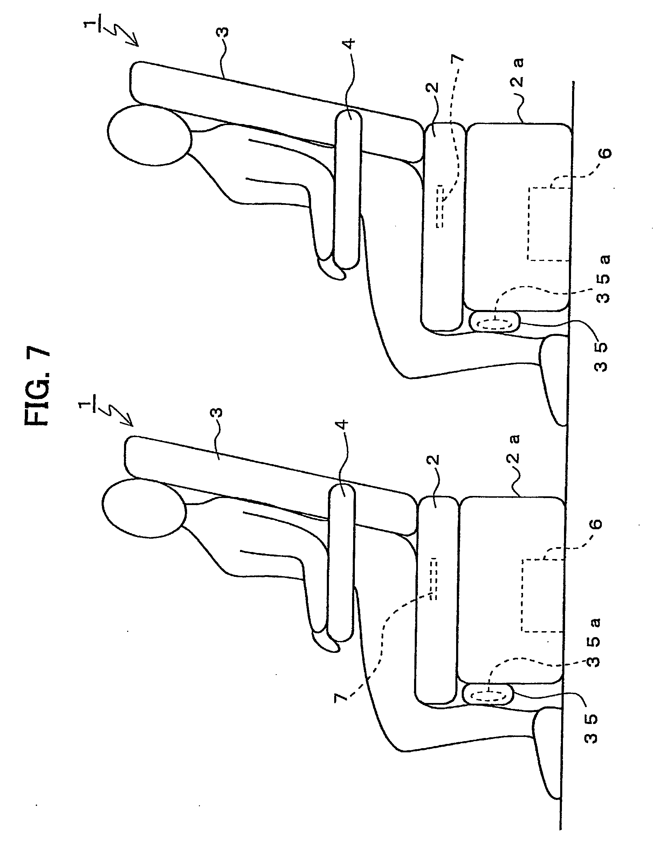

Further, as illustrated in Fig. 7, it may be allowed that the foot rest 35 is anchored to a front end of the seat foot section 2a (when the seat cushion 2 has a thickness, the front wall of the seat cushion 2 may be used in itself as the foot rest.), on which foot rest 35 the air bag 35a is then provided.

When in the congestion-preventing apparatus according to the present invention there is a fear that after the lapse of a predetermined time since an input signal from the sitting detection means 7A is inputted, the sitting occupant keeps the same attitude for a predetermined time, and hence muscles of the legs of the occupant are not energized, the sitting occupant can energize the muscles of the legs without being conscious of himself/herself, whereby the blood flow can be promoted to prevent congestion from happening as a result of sitting attitude over a long period of time and eliminate the congestion.

Additionally, since the counting of the timer 8a is started on the basis of the detection of the sitting detection means 7A, the time of the sitting is detected without fail. Further, since the sitting can be detected for each of many seat bodies 1 existent in an airplane for example, control appropriate for each occupant can be achieved.

Further, when it is judged that there is released the attitude up to now and muscles of the legs are energized such as releasing of the sitting state by the sitting release detection means 7B, i.e., such as standing and walking of the sitting occupant, since the clocking of the timer 8a is reset, the actuation means is actuated only at need. The actuation means is thus prevented from performing wasteful operation when the occupant does not sit on the seat body 1.

When it is judged that the congestion detection means measures non-destructively reduced hemoglobin concentration in blood of the sitting occupant, and conditions of the occupant are in a congestion state or in a state near the former state, the actuation means is actuated to move the legs of the occupant irrespective of a predetermined time previously set to the control means from the time of sitting detection being elapsed, so that congestion is more securely prevented. Further, since the congestion detection sensor 12 is provided on the operation section 4a of the arm rest 4, it is detected whether or not the conditions of the occupant are in the congestion state even if the occupant is not conscious about the congestion when each operation switch is operated.

Illustrated in Figs. 5 and 6 are those where actuation members (air bags 15A, 25A) are provided on the foot placing sections on which the occupant places his/her foots at all times, wherein the foot placing sections 15, 25 are useable for moving muscles of the legs, and there is no need of provision of an exclusive base for moving the muscles of the legs, whereby the construction of the apparatus is not only simplified, but also the muscles of the legs can be moved securely for placing the foots on the foot placing sections 15, 25 at all times.

In the apparatus as illustrated in Figs. 2(A), 2(B), wherein the air bags 5g, 5h are provided on the foot rest 5 for placing a foot section (the leg) to directly press the legs for the movement of muscles, these air bags 5g, 5h are expanded and shrunk with the operation of a massage switch of the operation section 4a by the sitting occupant, whereby these air bags 5g, 5h is useable not only for congestion-prevention but also for massage for the legs to improve conveniently a vehicle seat. When these foot rests 5 are unnecessary for the sitting occupant, they are accommodated below the seat cushion 2 without obstruction.

Since in any embodiment the air bags 5g, 5h contact with a human body or occupant through the surface layer section 5d, the sitting occupant enjoys a soft feeling without feeling of the existence of foreign matter.

Although in the aforementioned embodiments there are disclosed ones adopting the air bags which are expanded and shrunk with air, other ones may be useable, in which muscles of the legs may be moved and pressed by expansion and contraction (a motor and a solenoid are used.) of the arm and the like.

### Effect of the Invention

In accordance with the present invention, as described above, congestion can be prevented, which congestion is a factor to cause a lung thrombus, by moving muscles of the legs of an occupant or passenger even without the occupant being conspicuous in himself / herself, and particularly an optimum congestion -prevention apparatus for vehicle to use for a long time can be provided.

## Claims

1. An apparatus for preventing congestion for vehicle comprising:
a seat body;
actuation means for moving muscles of the legs of an occupant sitting on the seat body; and
control means for controlling said actuation means,
said control means actuating said actuation means after elapse of predetermined time since a predetermined input signal is inputted.

2. An apparatus for preventing congestion for vehicle comprising:
a seat body;
sitting detection means for detecting that an occupant sits on said seat body;
actuation means for moving muscles of the legs of the occupant sitting on said seat body; and
control means for controlling said actuation means,
said control means actuating said actuation means after elapse of predetermined time since the sitting is detected by said sitting detection means.

3. An apparatus for preventing congestion comprising:
a seat body;
sitting detection means for detecting sitting of an occupant on said seat body;
sitting releasing detection means for detecting releasing the sitting onto said seat body;
actuation means for energizing muscles of the legs of the occupant on said seat body; and
control means for controlling said actuation means including a timer,
said timer starting clocking when said sitting detection means detects the sitting, and resetting the clocking when said sitting release detection means detects releasing of the sitting,
said control means actuating said actuation means when said timer clocks a predetermined clocking time.

4. An apparatus for preventing congestion for vehicle comprising:
a seat body;
congestion detection means for detecting a congestion state of a sitting occupant on said seat body;
actuation means for energizing muscles of the legs of the sitting occupant on said seat body; and
control means for controlling said actuation means,
said control means actuating said actuation means when said congestion detection means detects the congestion state.

5. An apparatus for preventing congestion for vehicle according to any one of claims 1 to 4, wherein said actuation means includes actuation members for energizing muscles of the legs of the occupant by pressurizing /releasing the muscles of the legs of the occupant.

6. An apparatus for preventing congestion for vehicle according to claim 5, wherein said actuation means includes a foot placing base which is provided rotatably on said seat body.

7. An apparatus for preventing congestion for vehicle according to any one of claims 1 to 6, wherein said actuation means includes air bags which are expanded and shrunk by means of supply/exhaust of air.
